# EUROPEAN PATENT SPECIFICATION

(11) **EP 0 283 892 B1**
(45) Date of publication and mention of the grant of the patent: **09.06.1993**
(21) Application number: 88104001.8
(22) Date of filing: 14.03.1988
(51) Int. Cl.: C08G 18/62, C08G 18/80, C07C 271/08

(54) **Fluorine containing polyurethanes and polyisocyanate compound composition for its preparation**
Fluor enthaltende Polyurethane und Polyisocyanatverbindungszusammensetzung zu ihrer Herstellung
Polyuréthanes contenant du fluor et composition de composé polysocyanate pour leur préparation.

(30) Priority: 20.03.1987 JP 64249/87
(43) Date of publication of application: 28.09.1988
(73) Proprietor: ASAHI GLASS COMPANY LTD., Chiyoda-ku, Tokyo (JP)
(72) Inventor: Watanabe, Hiroyuki, Yokohama-shi Kanagawa-ken (JP); Washita, Hiroshi, Yokohama-shi Kanagawa-ken (JP); Kuga, Kazuhiko, Yokohama-shi Kanagawa-ken (JP)
(74) Representative: Wächtershäuser, Günter, Prof. Dr.

(56) References cited:
- FR-A- 2 540 131
- GB-A- 999 795
- US-A- 4 046 944
- US-A- 4 477 643

## Description

The present invention relates to a composition of a polyisocyanate compound useful as a starting material for e.g. polyurethane.

Polymers such as polyurethane, polyurethane urea, polyurea and polyisocyanurate are prepared by using a polyisocyanate compound as one of the main starting materials. For example, foams, sheets, films or other shaped products of polyurethane or coating materials, adhesives, water repellants and sealants are produced by using a polyisocyanate compound and a polyol as the main starting materials. In order to obtain desired characters or properties for a polymer prepared from a polyisocyanate compound as a starting material, it is common in most cases to pay attention primarily to the selection of additives or starting materials other than the polyol and the polyisocyanate compound. However, in some cases, the selection of the polyisocyanate compound is also an important factor. Accordingly, it is known, for example, to use two or more polyisocyanate compounds in combination or to modify a polyisocyanate compound by various compounds or by various treating methods in order to obtain the desired properties. Specific examples of such modified polyisocyanate compounds include prepolymer-type modified products which have been modified by a polyhydric alcohol such as trimethylol propane and urea modified products which have been modified by an amine or water as well as trimers, carbodiimide-modified products, biuret-modified products, etc.

FR-A-2540131 discloses compositions useful for treatment of construction materials, whereby the compositions contain a fluorine-containing copolymer component, a polyisocyanate or isocyanate prepolymer component, a catalyst component and substantial amounts of a solvent component. Such compositions are used to confer oleophobic and hydrophobic properties to the surface of construction materials such as concrete plates.

It happens not infrequently that a so-called modified product is in fact a mixture of a modified product and a non-modified product. The polyisocyanate compound composition of the present invention, which will be described hereinafter, is a composition comprising a modified polyisocyanate compound i.e. modified by a certain specific compound and a polyisocyanate compound not modified by such a compound. The polyisocyanate compound referred to hereinafter includes a modified polyisocyanate compound other than the one modified by this specific compound. For the production of a polymer obtainable by using a polyisocyanate compound as the starting material such as polyurethane (hereinafter referred to as an isocyanate polymer), it is common to firstly produce a mixture of a polyisocyanate compound with other starting materials (hereinafter referred to as a reactive mixture) and then produce an isocyanate polymer from this mixture by the reaction of the isocyanate groups. In this connection, there is a method wherein the reactive mixture is contacted with a substrate and while maintaining this contact state, the isocyanate polymer is formed. For example, in the case of a coating material or an adhesive, an isocyanate polymer is formed on a substrate to be coated or to be bonded. Further, it is also possible to employ a method wherein the reactive mixture is cast on a substrate having a releasing surface to form an isocyanate polymer and then it is released from the substrate to obtain a sheet or film of the isocyanate polymer. Further, in a molding method called reaction injection molding, an isocyanate polymer is formed while the reactive mixture is in contact with the inner surface of the mold as the substrate. For the formation of an isocyanate polymer on such a substrate, it frequently occurs that the contact state between the substrate and the reactive mixture creates a problem. One of the problems is a question of wettability between the reactive mixture and the substrate surface. When the reactive mixture is brought in contact with the substrate surface, if there exists a portion where the affinity of the reactive mixture with the substrate surface is low, there will be so-called runaway. If the isocyanate polymer is formed while such runaway takes place, there will be a pulled surface at the contact surface with the substrate, whereby the substrate surface can not satisfactorily be transferred to the surface of the isocyanate polymer. For instance, even when the substrate has a smooth surface, it will be difficult to obtain an isocyanate polymer having a smooth surface therefrom. Also in the case of coating a substrate, if the coating layer is thin, runaway is likely to lead to defects of the coating film surface.

The above-mentioned problem of runaway is considered to be attributable to low wettability of the reactive mixture to the substrate surface. Accordingly, such a problem is considered to be overcome by adding to the reactive mixture a modifier for improving the wettability. Such a modifier used to be called a leveling agent or a spreading agent. As such a modifier, for instance, a silicone resin or a compound having a polyfluoroalkyl group is known. EP 133090 discloses a process wherein such a modifier is incorporated to a polyol, and by using such a polyol composition, a polyurethane film or sheet can be produced by casting. However, addition of an effective amount of such a modifier to provide a desired effect to the reaction mixture tends to increase the lower limit of the effective amount, whereby it is likely that such a modifier adversely affects the nature or physical properties of the isocyanate polymer. Although, it is of course important to find a modifier which is effective in a small amount, it is also important to find a way to reduce the amount of addition.

As a result of a further study of the problem of runaway of the reactive mixture with the above-mentioned objective, it has been found that the reactive mixture is governed mainly by the polyisocyanate compound. Accordingly, it is considered that the effective amount of a modifier can be reduced by improving the wettability of the polyisocyanate compound, because in many cases, the polyisocyanate compound is a minor component as compared with the entire reactive mixture. On the other hand, this modifier must be reactive with the polyisocyanate compound because if it is non-reactive, even if it is added to the polyisocyanate compound, it will be diffused throughout the reactive mixture whereby it is meaningless to add the modifier preliminarily to the polyisocyanate compound.

It is an object of the present invention to overcome the above problems and to provide a modifier which is reactive with the polyisocyanate compound and is effective in a small amount to improve the wettability of the reactive mixture. This modifier is reactive with the polyisocyanate compound and is designed to be preliminarily added to and reacted with the polyisocyanate compound. Accordingly, the present invention provides a method for producing a polymer, which comprises reacting and curing on a substrate a reactive mixture comprising as essential components
(i) a polyisocyanate compound composition having been prepared by reacting in the absence of a solvent (A) a fluorine-containing compound having a polyfluoroalkyl group of at least 3 carbon atoms and an isocyanate reactive group with (B) a polyisocyanate compound in an amount stoicheometrically in excess of said fluorine-containing compound, (A) being present in an amount of at most 15% by weight based on the sum of (A+B), and (ii) a compound having at least two isocyanate-reactive groups.

Further, the present invention provides a method for producing a polymer sheet or film as defined in Claim 3 and a polyisocyanate compound composition useful in a method of the present invention, as defined in Claim 6.

Now, the present invention will be described in detail with reference to the preferred embodiments.

The reaction product of the fluorine-containing compound with the polyisocyanate compound in the present invention is not necessarily limited to a compound having a single structure. Of course, in some cases, a compound of a single structure may form. However, when the fluorine-containing compound has two or more isocyanate reactive groups, the product is considered to be a mixture of various compounds.

Some of reaction products of a fluorine-containing compound and a polyisocyanate compound are known. For instance, such reaction products are disclosed in e.g. Japanese Examined Patent Publications No. 9350/1963, No. 21331/1967, No. 26518/1968 and No. 20639/1969 and Japanese Unexamined Patent Publications No. 157190/1984 and No. 18317/1985. However, the reaction products disclosed in these publications are those used as starting materials for water or oil repellants or for fluorine-containing polyurethanes, whereby the fluorine-containing compound is used in an extremely large amount relative to the total polyisocyanate compound. Namely, even if a composition of a polyisocyanate compound contains an unreacted polyisocyanate compound, the amount of such an unreacted polyisocyanate compound is very small.

As mentioned above, the object of the present invention is to use a small amount of a fluorine-containing compound in order to improve the wettability of a reactive mixture for the preparation of an isocyanate polymer such as polyurethane, whereby there will be no substantial change in the nature or physical properties, except for the wettability, of the resulting isocyanate polymer as compared with the corresponding isocyanate polymer obtained by using the same polyisocyanate compound to which no fluorine-containing compound is added or reacted. In some cases, the physical properties such as oil repellency or non-adhesive properties may of course be improved due to the fluorine-containing compound. However, it is not the main purpose of the present invention to improve such properties of the isocyanate polymer.

The content of the reaction product in the polyisocyanate compound composition of the present invention is at most about 15% by weight as the amount of the fluorine-containing compound. Namely, although the fluorine-containing compound is reactive, it is assumed to be non-reactive for the purpose of definition that the content of the fluorine-containing compound in the polyisocyanate compound composition is at most about 15% by weight. As mentioned above, the reaction product of the fluorine-containing compound with the polyisocyanate compound is composed of various compounds having different structures and can not easily identify them. Accordingly, it is difficult to specify the content of the reaction product. Therefore, in the present invention, the content of the reaction product is defined in terms of the amount of the fluorine-containing compound as the latter is assumed to be non-reactive. The upper limit for the amount is preferably about 10% by weight, more preferably about 5% by weight. There is no particular restriction as to the lower limit so long as the intended effects can be obtained, but it is usually at a level of about 0.001% by weight, preferably about 0.1% by weight.

The polyisocyanate compound composition of the present invention comprises the fluorine-containing compound, the polyisocyanate compound and the reaction product derived therefrom. However, it may further contain other components (such as additives which will be described hereinafter). In such a case, the above-mentioned content of the reaction product (as represented by the amount of the fluorine-containing compound) is calculated as not containing such other components.

In the composition of the present invention, the content of the isocyanate group is preferably at least 10% by weight, more preferably at least 20% by weight. The reaction product in the present invention is a reaction product of the fluorine-containing compound with a polyisocyanate compound in an amount stoichiometrically in excess thereof. For example, when a fluorine-containing compound having m isocyanate reactive groups (monovalent groups) in an amount of 1 mol (i.e. m equivalent) is reacted with k mols of a n-valent polyisocyanate compound (i.e. kn equivalent), 1 mol of a compound having (kn - m) isocyanate groups will be formed, wherein m is an integer of at least 1 (in the case of a single compound), n is an integer of at least 2 (in the case of a single compound), and (kn - m) is positive. When (kn - m) is 0, a reaction product having a high molecular weight will be formed, such being undesirable. The reaction product is a reaction product wherein k is at most m, and if k exceeds m, a mixture with an unreacted polyisocyanate compound will be obtained. The polyisocyanate compound composition of the present invention is a mixture which is obtained either by reacting to one mol of the fluorine-containing compound the polyisocyanate compound in such an amount that (kn - m) would be positive as a whole or by diluting such a reaction product with a polyisocyanate compound. In particular, it is a mixture obtained by reacting the polyisocyanate compound in such an amount that k is larger than m. So long as the amount of the fluorine-containing compound in the polyisocyanate compound composition is within the above-mentioned range, m is usually substantially larger than k, although an exceptional case may exist (such as a case where the molecular weight of the fluorine-containing compound per the isocyanate reactive group is extremely small or a case where the molecular weight of the polyisocyanate compound per the isocyanate group is extremely large). Accordingly, the composition of the present invention can usually be obtained either by adding and reacting the fluorine-containing compound to the polyisocyanate compound, or by diluting the product further with a polyisocyanate compound.

The fluorine-containing compound in the present invention is a compound having a polyfluoroalkyl group having at least 3 carbon atoms and an isocyanate reactive group. The isocyanate reactive group is a functional group having an active hydrogen atom such as a hydroxyl group, an amino group, an imino group, a mercapto group or a carboxylic acid group. Among them, a hydroxyl group and an amino group are preferred. Particularly preferred is an alcoholic hydroxyl group. The number of the isocyanate reactive groups may be one, but preferably at least two. The polyfluoroalkyl group having at least 3 carbon atoms is preferably an alkyl group wherein at least a half (preferably at least 80%) of the total number of hydrogen atoms are substituted by fluorine atoms. Particularly preferred is a perfluoroalkyl group wherein all hydrogen atoms in the alkyl group are substituted by fluorine atoms. The carbon number of the polyfluoroalkyl group is preferably from 3 to 20, more preferably from about 5 to 16. This polyfluoroalkyl group will be hereinafter represented by Rf. The fluorine-containing compound in the present invention is a compound having at least one such Rf group and at least one isocyanate reactive group, and may generally be classified into a non-polymer type compound and a polymer type compound. The fluorine-containing compound in the present invention is preferably the latter i.e. a polymer type compound.

The above-mentioned non-polymer type compound may be represented by the general formula (Rf)ₚ-A(X)_{q} wherein each of p and q is an integer of at least 1, X is an isocyanate reactive group, and A is a p + q valent organic group. Preferably, it includes the compounds represented by the following formulas:

Rf-R¹-X, RfCONR²-R¹-X, RfSO₂R¹-X, RfSO₂NR²-R¹-X

In the above formulas, R¹ and R² may be different, R¹ is an alkylene group, an alkenylene group, an alkylene group having an X group, an acyloxy group-containing alkylene group, an alkylene group having a -R³-X group or a -NR²-R³-X group (wherein R³ is an alkylene group) or an alkylene group having an ether bond at its intermediate portion, and R² is a hydrogen atom, an alkyl group or a -R¹-X group. Further, epoxide adducts such as alkylene oxides of these compounds are also preferred. In the above formulas, R¹ is preferably an alkylene or acyloxy group having from 2 to 6 carbon atoms or an alkylene group having a hydroxyl group, and R² is preferably a hydrogen atom, an alkylene group having at most 4 carbon atoms or a -R¹-X group wherein R¹ is the above-mentioned preferred group. X is preferably a hydroxyl group.

The polymer type compound may be a homopolymer of a vinyl monomer having a Rf group and an X group or a copolymer of such a vinyl monomer with other monomer, or a copolymer of a vinyl monomer having a Rf group with a vinyl monomer having an X group, in some cases, together with other monomers. Particularly preferred is the latter copolymer. The vinyl monomer having a Rf group (or further having an X group) is preferably an ester of acrylic acid or methacrylic acid. The vinyl monomer having an X group is also preferably an ester of acrylic acid or methacrylic acid. Other monomers copolymerizable therewith include, in addition to an ester of acrylic acid or methacrylic acid, styrene, acrylonitrile, dienes, vinyl acetate, olefins, halogen-containing olefins and other monomers. Hereinafter, (meth)acrylic acid will be used to represent both acrylic acid and methacrylic acid. Likewise, (meth)acrylate will be used to represent both acrylate and methacrylate.

As the ester of (meth)acrylic acid having a Rf group, a (meth)acrylic acid ester of a compound which is the Rf group-containing compound represented by the above general formula wherein at least one X is a hydroxyl group. Particularly preferred is a (meth)acrylic acid ester of a compound represented by Rf-R¹-OH (wherein R¹ is the above mentioned preferred group). The ester of (meth)acrylic acid having a Rf group will hereinafter be referred to as FA. FA may have an X group, but preferably has no X group. In such a case, FA is copolymerized with a vinyl monomer having an X group, particularly a (meth)acrylic acid having an X group. As the (meth)acrylate having an X group, a monofunctional (i.e. having one (meth)acrylic acid residue) (meth)acrylate having an alkyl group of at most 8 carbon atoms having at least one hydroxyl group, particularly a monohydroxyalkyl group having at most 6 carbon atoms, or its alkylene oxide adduct is preferred. Preferably, the hydroxyl group-containing vinyl monomer is a monoester of at least one polyol, selected from polyhydric alcohols and polyoxyalkylene polyols, with acrylic acid or methacrylic acid. Specifically, there may be mentioned, for example, 2-hydroxyethyl (meth)acrylate, 2-hydroxypropyl (meth)acrylate and their alkyleneoxide adducts (such as polyoxyethyleneglycol mono(meth)acrylate or polyoxypropyleneglycol mono(meth)acrylate). These two types of vinyl monomers are preferably copolymerized with at least one other monomer. As such other monomer, an alkyl (meth)acrylate or styrene is preferred among the above-mentioned. This alkyl group preferably has at most 8 carbon atoms. Such an alkyl (meth)acrylate includes, for example, methyl (meth)acrylate, ethyl (meth)acrylate, butyl (meth)acrylate, hexyl (meth)acrylate and 2-ethylhexyl (meth)acrylate.

There is no particular restriction as to the proportion for copolymerization between the vinyl monomer having a Rf group and an X group and other monomer, or as to the proportion for copolymerization among the vinyl monomer having a Rf group, the vinyl monomer having an X group and optionally other monomer. However, the following proportion is preferred. When a vinyl monomer having a Rf group and an X group is used, the proportion of the vinyl monomer to the entire monomers is at least about 5 mol%, preferably from 20 to 100 mol%. In this case, as other monomer, a vinyl monomer having a Rf group or a vinyl monomer having an X group may be used alone. However, it is preferred to use a monomer other than these two types of vinyl monomers, or to use other monomer together with these two types of vinyl monomers. The proportion of the monomer other than these two types of vinyl monomers is preferably at least about 5 mol% to the entire monomers. When both of a Rf group-containing vinyl monomer and an X group-containing vinyl monomer are used, each proportion is preferably at least about 5 mol% to the entire monomers. More preferably, the proportion of the Rf group-containing vinyl monomer is from about 5 to 30 mol%, and the proportion of the X group-containing vinyl monomer is from about 50 to 95 mol%, to the entire monomers. Other monomer (excluding a vinyl monomer having a Rf group and an X group) may not be used. However, if used, it is preferably in an amount of at least about 5 mol%, more preferably from about 5 to 45 mol%, to the entire monomers.

There is no particular restriction as to the number average molecular weight of the polymer (including the copolymer) of the above monomers. However, it is usually from about 1,000 to 1,000,000, preferably from 5,000 to 100,000. If the molecular weight is too high, the solubility to the polyisocyanate compound decreases, and the solubility of the reaction product likewise decreases. On the other hand, if the molecular weight is too low, a polymer containing no Rf group and no X group tends to form as a byproduct. The molecular weight can be controlled by selecting the polymerization condition or by using a chain transfer agent such as mercaptan.

As the polyisocyanate compound in the present invention, compounds having at least two isocyanate groups in their molecules may be used alone or in combination of two or more. The polyisocyanate compounds include aliphatic, alicyclic and aromatic polyisocyanates and their modified products (excluding modified products according to the present invention). For example, there may be mentioned hexamethylene diisocyanate, octamethylene diisocyanate, trimethylhexamethylene diisocyanate, lysine diisocyanate, isophorone diisocyanate, hexahydrotolylene diisocyanate, bis(isocyanatemethyl)cyclohexane, methylenebis(cyclohexylisocyanate), xylylene diisocyanate, tolylene diisocyanate, diphenylmethane diisocyanate, polymethylenepolyphenyl isocyanate, tolidine diisocyanate, triphenylmethane triisocyanate or tris(4-isocyanatephenyl)thiophosphate. Further, a homopolymer or copolymer of an isocyanate group-containing vinyl monomer, for example, a homopolymer of a (meth)acrylate having an isocyanate alkyl group (particularly 2-isocyanate ethyl methacrylate) or its copolymer with a copolymerizable monomer such as an alkyl (meth)acrylate or styrene, is also useful as the polyisocyanate compound in the present invention. The modified products include prepolymer type modified products modified with polyhydric alcohols or other polyols, urea-modified products modified with polyamines or water, carbodiimide-modified products, biuret-modified products, trimers, dimers and other modified products.

The polyisocyanate compound composition of the present invention is obtained usually by adding and reacting the fluorine-containing compound to the excess equivalent amount of a polyisocyanate compound. The composition thus obtained may be diluted by an addition of a polyisocyanate compound, if necessary. The production of the composition may be conducted in the presence of an inert solvent or in the presence of a reaction accelerator such as a urethane-forming catalyst. In addition to the reaction product and unreacted polyisocyanate compound, other additives may be incorporated to the composition of the present invention. Such additives may be incorporated preliminarily to the polyisocyanate compound or the fluorine-containing compound before the reaction, so long as they do not adversely affect the reaction. Such additives include stabilizers such as an antioxidant, a ultraviolet absorber or a light stabilizer, coloring agents, fillers and foaming agents. Further, depending upon the particular purpose, a blocking agent may be reacted to the composition of the present invention to obtain a composition containing a blocked isocyanate compound or a blocked reaction product.

The polyisocyanate compound composition of the present invention may be used for the same applications as usual polyisocyanate compounds. Particularly, it is suitable as a starting material for an isocyanate polymer. Namely, it may be reacted with at least one compound having at least two X groups as mentioned above to obtain a condensation polymerization-type polymer. For example, when reacted with a polyol, it produces a polyurethane, and when reacted with a polyol and a polyamine, it produces a polyurethane urea. If reacted with a polyurethane in the presence of a trimerizing catalyst, it produces a polyurethane-modified polyisocyanurate. When reacted with a polyamine or water, it produces a polyurea. When reacted with a polycarboxylic acid, it produces a polyamide or a polyamideimide. The composition of the present invention is particularly suitable as a starting material for a polyurethane polymer such as polyurethane or polyurethane urea.

The polyurethane polymer is a polymer obtained by reacting a polyol or a polyol and a polyamine to a polyisocyanate compound. The polyol includes a high molecular weight polyol such as polyether polyol, polyester polyol, polycarbonate polyol or an addition polymerization type polymer having at least two hydroxyl groups (such as a butadiene type polymer or a hydroxyalkyl (meth)acrylate type polymer) and a low molecular weight polyol such as a polyhydric alcohol which is called a chain extender or a cross-linking agent. The polyamine includes a relatively low molecular weight polyamine which is called a chain extender or a cross-linking agent and a relatively high molecular weight polyamine such as a polyoxyalkylene having at least two amine groups at the molecular terminals. The composition of the present invention is particularly suitable for use for the production of a polyurethane polymer which is obtainable by using a relatively high molecular weight polyol and a chain extender or a cross-linking agent. Particularly when a polyol having 2 or 3 hydroxyl groups and a hydroxyl value of from 20 to 60 and a bivalent to tetravalent chain extender or cross-linking agent having a molecular weight of at most 400 are reacted with a polyisocyanate in an amount of from 0.8 to 1.3 times by equivalent to the total amount of the polyol and the cross-linking agent to prepare a sheet or film of a polyurethane elastomer or polyurethane urea elastomer, the compound of the present invention is preferably employed as the polyisocyanate. For the production of such a sheet or film, a prepolymer method or a semiprepolymer method may be employed. However, it is particularly preferred to employ a one shot method. Namely, a relatively high molecular weight polyol, a chain extender or a cross-linking agent, and the composition of the present invention having a relatively high content of isocyanate groups (preferably at least 10% by weight) are simultaneously mixed and reacted to obtain the above-mentioned sheet or film.

As mentioned above, the composition of the present invention is effective when used in a field of producing an isocyanate polymer involving a step of contacting the reactive mixture to the substrate. Namely, the composition of the present invention is useful in the field of producing an isocyanate polymer which is obtainable by curing the reactive mixture in a state contacted with a substrate surface by a casting method, an injection method or a coating method. Specifically, it is useful for the production of a film, sheet or other shaped product by casting, the production of a foam by molding by means of a mold, the production of a shaped product by reaction injection molding and the application to the field of coating materials or adhesives. The composition of the present invention is particularly suitable for use in the field of the production of an isocyanate polymer where a thin layer is formed (where the surface properties are critical) without applying any substantial pressure to contact the reactive mixture with the substrate surface (when a pressure is applied for contact, there will be no substantial problem with respect to wettability), such as the production of a sheet or film by casting and the application as a coating material. Most preferably, it is used for the production of a sheet or film by casting it on a substrate having a releasing surface.

Now, the present invention will be described in further detail with reference to Examples. However, it should be understood that the present invention is by no means restricted to such specific Examples. The following materials were used.
TDI80:
Mixture of 2,4-tolylene diisocyanate and 2,6-tolylene diisocyanate in a weight ratio of 80:20.
Fluorine-containing polyol solution A:
70 wt% ethyl acetate solution of a copolymer obtained by copolymerizing an acrylic acid ester of C₈F₁₇CH₂CH₂OH, a methacrylic acid monoester of polyethylene glycol (polymerization degree: about 5) and a methacrylic acid monoester of polypropylene glycol (polymerization degree: about 5) in a weight ratio of 1:2:2.
Fluorine-containing polyol solution B:
70 wt% ethyl acetate solution of a copolymer obtained by copolymerizing an acrylic acid ester of C₈F₁₇CH₂CH₂OH, a methacrylic acid ester of a polyether monool obtained by adding 5 mol of ethylene oxide and then 5 mol of propylene oxide to 1 mol of butanol and 2-hydroxyethyl methacrylate in a weight ratio of 1:5:1.

### EXAMPLE 1

Into a 3 liter separable flask equipped with a mechanical stirrer, a Liebig condenser, a 500 ml dropping funnel and a nitrogen supply tube, 2,000 g of TDI80 was introduced and heated to 80°C under stirring. Then, 100 g of fluorine-containing polyol solution A was dropwise added thereto over a priod of 3 hours from the dropping funnel while introducing nitrogen. After the completion of the dropwise addition, the reaction was continued for 2 hours. Then, the supply of nitrogen was stopped, and the solvent was removed under reduced pressure for one hour. The reaction mixture was left to cool. The polyisocyanate composition thereby obtained was a slightly yellow liquid with a NCO content of 46.3%.

### EXAMPLE 2

Instead of TDI80 of Example 1, 2,000 g of methylenebis(cyclohexylisocyanate) and 0.30 g of dibutyltin dilaurate were introduced into the flask, and 33.8 g of fluorine-containing polyol solution A was dropwise added and reacted, followed by removal of the solvent and cooling under the same conditions as in Example 1. The polyisocyanate composition thus obtained was a slightly yellow liquid with a NCO content of 31.7%.

### EXAMPLE 3

Instead of TDI80 of Example 1, 2,000 g of isophorone diisocyanate and 0.30 g of dibutyltin dilaurate were introduced into the flask, and 45.30 g of fluorine-containing polyol solution A was dropwise added and reacted, followed by removal of the solvent and cooling under the same conditions as in Example 1. The polyisocyanate composition thus obtained was a slightly yellow liquid with a NCO content of 37.1%.

### EXAMPLE 4

Instead of the fluorine-containing polyol solution A of Example 1, 80 g of fluorine-containing polyol solution B was dropwise added to 2,000 g of TDI80 and reacted, followed by removal of solvent and cooling under the same condition as in Example 1. The polyisocyanate composition thus obtained was a slightly yellow liquid with a NCO content of 46.4%.

### EXAMPLE 5

Instead of fluorine-containing polyol solution A of Example 2, 29.3 g of fluorine-containing polyol solution B was dropwise added to 2,000 g of methylenebis(cyclohexylisocyanate) and 0.30 g of dibutyltin dilaurate and reacted, followed by removal of the solvent and cooling under the same conditions as in Example 2. The polyisocyanate composition thus obtained was a slightly yellow liquid with a NCO content of 31.6%.

### EXAMPLE 6

Instead of fluorine-containing polyol solution A of Example 3, 40.6 g of fluorine-containing polyol solution B was dropwise added to 2,000 of isophorone diisocyanate and 0.30 g of dibutyltin dilaurate and reacted, followed by removal of the solvent and cooling under the same conditions as in Example 3. The polyisocyanate composition thus obtained was a slightly yellow liquid with a NCO content of 37.1%.

### EXAMPLE 7

Into a 200 ml separable flask, 50.38 g of poly(caprolactone)diol having a hydroxyl value of 95.2 and 21.59 g of poly(caprolactone)triol having a hydroxyl value of 200.5 were introduced, dissolved at 110°C, stirred, degassed and dehydrated. The mixture was cooled to 80°C, and then 10.80 g of 1,4-butanediol was added thereto. Then, 37.24 g of the polyisocyanate composition obtained in Example 1 was added thereto, and the mixture was stirred. Heat was generated by the mixing, and the stirring was continued for about 1 minute until the system became uniform. Then, defoaming under reduced pressure was sufficiently conducted. A uniform tention was applied to the reaction mixture thus obtained. The mixture was cast on a polyethylene terephthalate film treated for releasing (release PET film) in a thickness of 0.5 mm by an applicator and kept in an oven at 140°C for 1 hour. After cooling, the cured product was peeled off the release PET film to obtain a transparent urethane sheet having a thickness of 0.5 mm with no defect on appearance.

### EXAMPLE 8

In the same manner as in Example 7, a transparent urethane sheet having a thickness of 0.5 mm with no defect on appearance was prepared by using 47.04 g of a polycaprolactone diol having a hydroxyl value of 95.2, 20.16 g of a polycaprolactone triol having a hydroxyl value of 200.5, 8.06 g of 1,4-butanediol and 44.73 g of the polyisocyanate composition of Example 2.

### EXAMPLE 9

In the same manner as in Example 7, a transparent urethane sheet having a thickess of 0.5 mm with no defect on appearance was prepared by using 46.78 g of a polycaprolactone diol having a hydroxyl value of 95.2, 20.05 g of a polycaprolactone triol having a hydroxyl value of 200.5, 10.02 g of 1,4-butanediol and 43.15 g of the polyisocyanate composition of Example 3.

### COMPARATIVE EXAMPLE 1

The reaction was conducted in the same manner as in Example 9 by using 42.35 g of isophorone diisocyanate instead of the polyisocyanate composition of Example 3. The urethane sheet thereby obtained had many runaway holes and having a thickness of about 2 mm with a poor outer appearance.

### COMPARATIVE EXAMPLE 2

The reaction was conducted in the same manner as in Example 9 by using 42.36 g of isophorone diisocyanate and 0.67 g of a fluorine-containing polyol subjected to removal of the solvent, instead of the polyisocyanate composition of Example 3. The urethane sheet thus obtained contained many foams due to foaming and having a thickness of 0.5 mm with a poor outer appearance, although it had no runaway hole.

### EXAMPLE 10

In the same manner as in Example 7, a transparent urethane sheet having a thickness of 0.5 mm with no defect on appearance was prepared by using 47.38 g of a polybutylene adipatediol having a hydroxyl value of 103.2, 20.31 g of a polycaprolactone triol having a hydroxyl value of 200.5, 13.54 g of neopentyl glycol and 38.77 g of the polyisocyanate composition of Example 4.

### EXAMPLE 11

In the same manner as in Example 7, a transparent urethane sheet having a thickness of 0.8 mm with no defect on appearance was prepared by using 83.34 g of a polycaprolactone diol having a hydroxyl value of 95.2, 68.19 g of a polycaprolactone triol having a hydroxyl value of 112.3, 15.15 g of 1,4-butanediol and 83.31 g of the polyisocyanate composition of Example 5 and by using a 300 ml separable flask.

### EXAMPLE 12

In the same manner as in Example 7, a transparent urethane sheet having a thickness of 0.8 mm with no defect on appearance was prepared by using 98.58 g of a poly(oxytetramethylene)glycol having a hydroxyl value of 114.5, 42.25 g of a polycaprolactone triol having a hydroxyl value of 200.5, 19.72 g of 1,4-butanediol and 89.45 g of the polyisocyanate composition of Example 6 and by using a 300 ml separable flask.

### EXAMPLE 13

In the same manner as in Example 7, a transparent urethane sheet having a thickness of 1.0 mm with no defect on appearance was prepared by using 105.00 g of a polycaprolactone diol having a hydroxyl value of 95.2, 19.09 g of a polycaprolactone triol having a hydroxyl value of 200.5, 33.41 g of a poly(1,6-hexanecarbonate)diol having a hydroxyl value of 52.6, 33.41 g of a poly(alkylenecarbonate)diol having a hydroxyl value of 129.7 (carbonate diol of 1,6-hexanediol and 1,4-cyclohexane dimethanol), 15.27 g of 1,4-butanediol and 93.81 g of the polyisocyanate composition of Example 2, and by using a 500 ml separable flask.

This sheet was cut into a size of 30 x 30 cm and sandwiched between a pair of glass plates having a size of 30 x 30 cm, and the assembly was introduced into an autoclave. One of the glass plates were preliminarily treated for releasing by applying a polydimethylsiloxane uniformly on the surface to be brought in contact with the sheet, followed by heat treatment at 350°C. On the surface of the other glass plate to be contacted with the sheet, α-glycidoxypropyl trimethoxysilane was uniformly coated. The autoclave was initially vacuumed to remove air between the glass plates and the sheet and then heated to 120°C under vacuum for preliminary press-bonding. Then, the autoclave was maintained at 140°C under a pressure of 13 kg/cm² for about 30 minutes to completely bond the sheet to the glass plate. Then, the assembly was withdrawn from the autoclave, and the release-treated glass plate was removed to obtain a bilayer glass composed of urethane sheet/glass.

By using the polyisocyanate compound composition of the present invention, it is possible to improve the wettability of the polymer obtained by using a polyisocyanate compound and thus to reduce the production rate of a defective outer appearance. In the case of a non-reactive improving agent, it was likely that the improving agent bleeded out on the surface of the product, thus leading to an inferior outer appearance or an inferior wet-on-wet coating property. The present invention is effective to prevent such drawbacks. Further, wettability-improving agents are in many cases hygroscopic, whereby foaming attributable to water content is likely to result during the preparation of a polymer, and defects are likely to result in the non-foam products. No such foaming is observed when the composition of the present invention is used. The composition of the present invention is effective for improving the outer appearance and the strength of the product.

## Claims

1. A method for producing a polymer, which comprises reacting and curing on a substrate a reactive mixture comprising as essential components
(i ) a polyisocyanate compound composition having been prepared by reacting in the absence of a solvent (A) a fluorine-containing compound having a polyfluoroalkyl group of at least 3 carbon atoms and an isocyanate reactive group with (B) a polyisocyanate compound in an amount stoicheometrically in excess of said fluorine-containing compound, (A) being present in an amount of at most 15% by weight based on the sum of (A+B), and
(ii) a compound having at least two isocyanate-reactive groups.

2. The method according to Claim 1, wherein the compound having isocyanate reactive groups (ii) is a compound having at least two functional groups selected from a hydroxyl group and an amino group.

3. A method for producing a polymer sheet or film, which comprises casting, reacting and curing on a substrate having a releasing surface a reactive mixture comprising as essential components
(i) a polyisocyanate compound composition as defined in Claim 1, and
(ii) a compound having at least two isocyanate-reactive groups.

4. The method according to Claim 3, wherein the compound having isocyanate reactive groups is a compound having at least two functional groups (ii) selected from a hydroxyl group and an amino group.

5. The method according to Claim 4, wherein the compound having isocyanate reactive groups (ii) is a combination of a polyol having a relatively high molecular weight and a polyol having a relatively low molecular weight, the latter functioning as a chain extender or a cross-linking agent.

6. A polyisocyanate compound composition useful in a method of Claim 1 or Claim 3, having been prepared by reacting in the absence of a solvent (A) a fluorine-containing compound having a polyfluoroalkyl group of at least three carbon atoms and an isocyanate reactive group with (B) a polyisocyanate compound in an amount stoicheometrically in excess of said fluorine-containing compound, (A) being present in an amount of at most 15% by weight based on the sum of (A+B).

7. The composition according to Claim 6, wherein the content of said reaction product is from 0.1 to 5% by weight as the proportion of the residues of said fluorine-containing compound.

8. The composition according to Claim 6, wherein the isocyanate reactive group is a hydroxyl group.

9. The composition according to Claim 6, wherein the fluorine-containing compound is a compound having at least two hydroxyl groups.

10. The composition according to Claim 6, wherein the fluorine-containing compound is a copolymer of a least two monomers including a vinyl monomer having a polyfluoroalkyl group of at least 3 carbon atoms and a hydroxyl group-containing vinyl monomer.

11. The composition according to Claim 10, wherein the copolymer is a copolymer of a monomer mixture comprising from 5 to 30 mol% of the polyfluoroalkyl group-containing vinyl monomer and from 50 to 95 mol% of the hydroxyl group-containing vinyl monomer.

12. The composition according to Claim 10, wherein the polyfluoroalkyl group-containing vinyl monomer is an ester of a polyfluoroalkyl group-containing monool with acrylic acid or methacrylic acid.

13. The composition according to Claim 10, wherein the hydroxyl group-containing vinyl monomer is a monoester of at least one polyol selected from polyhydric alcohols and polyoxyalkylene polyols, with acrylic acid or methacrylic acid.

## Patentansprüche

1. Verfahren zum Herstellen eines Polymers, umfassend das Umsetzen und Härten einer reaktiven Mischung auf einem Substrat, wobei die Mischung als wesentliche Komponenten umfaßt
(i) eine Polyisocyanatverbindungs-Zusammensetzung, die erhalten wurde durch Umsetzen in Abwesenheit eines Lösungsmittels von (A) einer fluorhaltigen Verbindung mit einer Polyfluoralkylgruppe von mindestens 3 Kohlenstoffatomen und einer mit Isocyanat reagierenden Gruppe mit (B) einer Polyisocyanatverbindung in einer Menge, die stöchiometrisch im Überschuß zu der fluorhaltigen Verbindung ist, wobei (A) in einer Menge von höchstens 15 Gew.-% ,bezogen auf die Summe von (A+B), vorhanden ist und
(ii) eine Verbindung mit mindestens 2 mit Isocyanat reaktiven Gruppen.

2. Verfahren nach Anspruch 1, worin die Verbindung (ii) mit den mit Isocyanat reaktiven Gruppen eine Verbindung ist, die mindestens zwei funktionelle Gruppen aufweist, ausgewählt aus einer Hydroxylgruppe und einer Aminogruppe.

3. Verfahren zum Herstellen einer Polymerfolie oder eines Polymerfilms umfassend das Gießen, Umsetzen und Härten einer reaktiven Mischung auf einem Substrat mit einer freigebenden Oberfläche, wobei die Mischung als wesentliche Komponenten umfaßt
(i) eine Polyisocyanatverbindungs-Zusammensetzung, wie sie in Anspruch 1 definiert ist und
(ii) eine Verbindung mit mindestens zwei mit Isocyanat reagierenden Gruppen.

4. Verfahren nach Anspruch 3, worin die Verbindung mit mit den mit Isocyanat reaktiven Gruppen eine Verbindung (ii) ist, die mindestens zwei funktionelle Gruppen, ausgewählt aus einer Hydroxylgruppe und einer Aminogruppe, hat.

5. Verfahren nach Anspruch 4, worin die Verbindung (ii) mit den mit Isocyanat reaktiven Gruppen eine Kombination eines Polyols mit relativ hohem Molekulargewicht und eines Polyols mit einem relativ geringem Molekulargewicht ist, wobei die Letztere zur Kettenverlängerung dient oder als ein Vernetzungsmittel wirkt.

6. Eine Polyisocyanatverbindungs-Zusammensetzung, brauchbar in einem Verfahren nach Anspruch 1 oder Anspruch 3, die hergestellt wurde durch Umsetzen bei Abwesenheit eines Lösungsmittels von (A) einer fluorhaltigen Verbindung mit einer Polyfluoralkylgruppe von mindestens 3 Kohlenstoffatomen und einer mit Isocyanat reaktiven Gruppe mit (B) einer Polyisocyanatverbindung in einer Menge, die stöchiometrisch im Überschuß zu der fluorhaltigen Verbindung vorhaden ist, wobei (A) in einer Menge von höchstens 15 Gew.-%, bezogen auf die Summe von (A+B), vorhanden ist.

7. Zusammensetzung nach Anspruch 6, worin der Gehalt des Reaktionsproduktes 0,1 bis 5 Gew.-% des Anteils der Reste der fluorhaltigen Verbindung beträgt.

8. Zusammensetzung nach Anspruch 6, worin die mit Isocyanat reagierende Gruppe eine Hydroxylgruppe ist.

9. Zusammensetzung nach Anspruch 6, worin die fluorhaltige Verbindung eine Verbindung mit mindestens zwei Hydroxylgruppen ist.

10. Zusammensetzung nach Anspruch 6, worin die fluorhaltige Verbindung ein Copolymer aus mindestens zwei Monomeren ist, die ein Vinylmonomer mit einer Polyfluoralkylgruppe von mindestens drei Kohlenstoffatomen und ein hydroxylgruppenhaltiges Vinylmonomer einschließen.

11. Zusammensetzung nach Anspruch 10, worin das Copolymer ein Copolymer einer Monomermischung ist, umfassend von 5 bis 30 Mol% des die Polyfluoralkylgruppe enthaltenden Vinylmonomers und von 50 bis 95 Mol% des hydroxylgruppenhaltigen Vinylmonomers.

12. Zusammensetzung nach Anspruch 10, worin das polyfluoralkylgruppenhaltige Vinylmonomer ein Ester eines polyfluoralkylgruppenhaltigen Monoalkohols (monool) mit Acrylsäure oder Methacrylsäure ist.

13. Zusammensetzung nach Anspruch 10, worin das hydroxylgruppenhaltige Vinylmonomer ein Monoester mindestens eines Polyols, ausgewählt aus mehrwertigen Alkoholen und Polyoxyalkylenpolyolen, mit Acrylsäure oder Methacrylsäure ist.

## Revendications

1. Procédé de fabrication d'un polymère, qui comprend la réaction et le durcissement sur un substrat d'un mélange réactif comprenant comme composants essentiels :
(i) une composition d'un composé polyisocyanate, ayant été préparée par réaction, en l'absence d'un solvant, (A) d'un composé contenant du fluor ayant un groupe polyfluoroalkyle d'au moins 3 atomes de carbone et un groupe capable de réagir avec les groupes isocyanate, avec (B) un composé polyisocyanate dans une quantité stoechiométriquement en excès dudit composé contenant du fluor, (A) étant présent dans une quantité d'au plus 15% en poids sur la base de la somme de (A+B), et
(ii) un composé ayant au moins deux groupes capables de réagir avec les groupes isocyanate.

2. Procédé selon la revendication 1, dans lequel le composé (ii) ayant des groupes capables de réagir avec les groupes isocyanate est un composé ayant au moins deux groupes fonctionnels choisis parmi un groupe hydroxyle et un groupe amino.

3. Procédé de fabrication d'une feuille ou d'un film de polymère, qui comprend la coulée, la réaction et le durcissement sur un substrat ayant une surface de démoulage d'un mélange réactif comprenant comme composants essentiels:
(i) une composition d'un composé polyisocyanate telle que définie à la revendication 1 ; et
(ii) un composé ayant au moins deux groupes capables de réagir avec les groupes isocyanate.

4. Orocédé selon la revendication 3, dans lequel le composé ayant des groupes capables de réagir avec les groupes isocyanate est un composé (ii) ayant au moins deux groupes fonctionnels choisis parmi un groupe hydroxyle et un groupe amino.

5. Procédé selon la revendication 4, dans lequel le composé (ii) ayant des groupes capables de réagir avec les groupes isocyanate est une combinaison d'un polyol ayant une masse moléculaire relativement élevée et d'un polyol ayant une masse moléculaire relativement faible, ce dernier jouant le rôle d'un agent d'allongement de chaîne ou d'un agent réticulant.

6. Composition d'un composé polyisocyanate utile dans un procédé tel que défini à la revendication 1 ou à la revendication 3, ayant été préparée par réaction, en l'absence d'un solvant, (A) d'un composé contenant du fluor ayant un groupe polyfluoroalkyle d'au moins trois atomes de carbone et un groupe capable de réagir avec les groupes isocyanate, avec (B) un composé polyisocyanate en quantité stoechiométriquement en excès dudit composé contenant du fluor, (A) étant présent dans une quantité d'au plus 15% en poids sur la base de la somme de (A+B).

7. Composition selon la revendication 6, dans laquelle la teneur en ledit produit de réaction est de 0,1 à 5% en poids, calculée en tant que proportion des restes dudit composé contenant du fluor.

8. Composition selon la revendication 6, dans laquelle le groupe capable de réagir avec les groupes isocyanate est un groupe hydroxyle.

9. Composition selon la revendication 6, dans laquelle le composé contenant du fluor est un composé ayant au moins deux groupes hydroxyle.

10. Composition selon la revendication 6, dans laquelle le composé contenant du fluor est un copolymère d'au moins deux monomères comprenant un monomère vinylique ayant un groupe polyfluoroalkyle d'au moins 3 atomes de carbone et un monomère vinylique à groupe hydroxyle.

11. Composition selon la revendication 10, dans laquelle le copolymère est un copolymère d'un mélange de monomères comprenant de 5 à 30% en moles du monomère vinylique contenant un groupe polyfluoroalkyle et de 50 à 95% en moles du monomère vinylique à groupe hydroxyle.

12. Composition selon la revendication 10, dans laquelle le monomère vinylique contenant un groupe polyfluoroalkyle est un ester de monool contenant un groupe polyfluoroalkyle avec l'acide acrylique ou l'acide méthacrylique.

13. Composition selon la revendication 10, dans laquelle le monomère vinylique à groupe hydroxyle est un monoester d'au moins un polyol choisi parmi les alcools polyhydriques et les polyoxyalkylène polyols, avec l'acide acrylique ou l'acide méthacrylique.
